# EUROPEAN PATENT APPLICATION

(11) **EP 4 773 191 A1**
(43) Date of publication of application: **08.07.2026**
(21) Application number: 25857951.5
(22) Date of filing: 02.10.2025
(51) Int. Cl.: H01M 4/04, H01M 10/04, B30B 3/00

(54) **ELECTRODE GROOVE FORMING DEVICE AND SECONDARY BATTERY FORMED THEREBY**

(30) Priority: 16.10.2024 KR 20240141631; 01.10.2025 KR 20250143509
(71) Applicant: LG ENERGY SOLUTION, LTD., Seoul 07335 (KR)
(72) Inventor: The designation of the inventor has not yet been filed
(74) Representative: Goddar, Heinz J.
(86) International application number: PCT/KR2025/015821
(87) International publication number: WO 2026/084359

(57) **Abstract**

An electrode groove forming apparatus according to the present disclosure is configured to form an electrode groove on an electrode, and includes a roller body configured to rotate, a stage configured to support the electrode, and a protrusion protruding from an extension start point on the roller body. The protrusion includes a portion having a predetermined angle relative to an imaginary line extending from a center of the roller body toward the extension start point.

## Description

### TECHNICAL FIELD

### CROSS-REFERENCE TO RELATED APPLICATIONS

This application is based on and claims priority from Korean Patent Application No. 10-2024-0141631 filed on October 16, 2024 and Korean Patent Application No. 10-2025-0143509 filed on October 1, 2025, with the Korean Intellectual Property Office, the disclosure of which is incorporated herein in its entirety by reference.

### TECHNICAL FIELD

The present disclosure relates to a roller, an electrode groove forming apparatus including the roller, and a secondary battery formed thereby.

### BACKGROUND ART

A secondary battery for generating electricity includes a battery case, an electrode assembly accommodated in the battery case, and an electrolyte. The electrode assembly may include a plurality of electrodes and a plurality of separators repeatedly stacked between the plurality of electrodes. When the plurality of electrodes and the plurality of separators are manufactured by stacking, the pressure is increased to increase the adhesion between the electrode and the separator. In this process, issues such as damage to the electrode and separator may occur, indicating a need for improvements in the manufacturing process.

### DISCLOSURE

### TECHNICAL PROBLEM

The present disclosure provides a secondary battery or a roller for manufacturing the secondary battery for increasing the adhesion between an electrode and a separator and for preventing a gas from being trapped between the electrode and the separator, and an electrode groove forming apparatus including the same.

The technical issues to be addressed by the present disclosure are not limited to the above-mentioned technical issues, and other technical issues not mentioned will be clearly understood by those skilled in the art to which the present disclosure pertains from the descriptions below.

### TECHNICAL SOLUTION

An electrode groove forming apparatus according to one embodiment of the present disclosure is configured to form an electrode groove on an electrode and includes a roller body configured to rotate, a stage configured to support the electrode, and a protrusion protruding from an extension start point on the roller body, wherein the protrusion includes a portion having a predetermined angle relative to an imaginary line extending from a center of the roller body toward the extension start point.

The protrusion may form a curve.

The protrusion may be provided in a plurality, and the plurality of protrusions may be curved in the same direction relative to the imaginary line.

The protrusion may include a first protrusion portion that extends from the extension start point, and a second protrusion portion that is bent at a bending portion and extends from the first protrusion portion at a predetermined angle relative to the first protrusion portion.

The bending portion may be configured to form the electrode groove.

The roller body may be configured to rotate in a forward direction or in a reverse direction opposite to the forward direction, the forward direction being a direction in which an extension direction forming the predetermined angle is directed toward the electrode.

The protrusion may be configured such that a depth of the electrode groove formed while the roller body rotates in the reverse direction is shallower than the depth of the electrode groove formed while the roller body rotates in the forward direction.

The protrusion may be configured to be deformable.

The protrusion may be made of a fabric material.

The stage may be configured to slide, and the protrusion may be configured to come into contact with the electrode and form the electrode groove as the stage slides and moves the electrode.

The stage may be configured to slide in a longitudinal direction of the electrode.

An extension direction of the protrusion forming the predetermined angle may be included within the same plane as a sliding direction of the stage.

The roller body may be configured to have an adjustable rotation speed.

The roller body may be configured such that a gap between the roller body and the stage is adjustable.

The roller body and the protrusion may define a roller, and the roller may be configured to perform rolling on the electrode.

A roller according to one embodiment of the present disclosure includes a roller body configured to rotate, and a plurality of protrusions protruding from an extension start point on the roller body, wherein the plurality of protrusions include a portion having a predetermined angle relative to an imaginary line extending from a center of the roller body toward the extension start point.

The plurality of protrusions may form a curve.

The plurality of protrusions may be curved in the same direction relative to the imaginary line.

The plurality of protrusions may include a first portion that extends from the extension start point, and a second portion that is bent at a bending portion and extends from the first portion at a predetermined angle relative to the first portion.

A secondary battery according to one embodiment of the present disclosure includes an electrode having a plurality of electrode grooves formed therein and stacked in a plurality, a separator stacked alternately with the plurality of electrodes, and a battery case accommodating the electrode and the separator, wherein the plurality of electrode grooves are formed parallel to each other on the electrode.

### ADVANTAGEOUS EFFECTS

An electrode assembly manufactured by a roller and a groove forming apparatus for the manufacture of a secondary battery according to one embodiment of the present disclosure increases the adhesion between an electrode and a separator, and prevents or alleviates a gas from being trapped between the electrode and the separator. In addition, a secondary battery including the electrode assembly manufactured in this manner has improved durability and safety.

The effects obtainable in the present disclosure are not limited to the above-mentioned effects, and other effects not mentioned will also be clearly understood by those skilled in the art to which the present disclosure pertains from the descriptions below.

### BRIEF DESCRIPTION OF THE DRAWINGS

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is an exploded view of a secondary battery according to a first embodiment of the present disclosure.
FIG. 2 is a perspective view illustrating a roller for manufacturing an electrode illustrated in FIG. 1 and the electrode manufactured thereby.
FIG. 3 is a cross-sectional view taken along a plane perpendicular to the longitudinal direction of the roller illustrated in FIG. 2.
FIG. 4 is an enlarged cross-sectional view of a portion relating to a protrusion illustrated in FIG. 3.
FIG. 5 is a conceptual view illustrating the formation of electrode grooves on the electrode when the roller illustrated in FIG. 3 rotates in the forward direction.
FIG. 6 is a conceptual view illustrating the formation of electrode grooves on the electrode when the roller illustrated in FIG. 3 rotates in the reverse direction.
FIG. 7 is an enlarged cross-sectional view illustrating a portion relating to a protrusion according to a second embodiment of the present disclosure.
FIG. 8 is an enlarged cross-sectional view illustrating a portion relating to a protrusion according to a third embodiment of the present disclosure.
FIG. 9 is a conceptual view illustrating the formation of electrode grooves on the electrode when a roller according to a fourth embodiment of the present disclosure rotates in the forward direction.
FIG. 10 is an exploded view of a secondary battery according to a fifth embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION OF THE INVENTION

Hereinafter, embodiments of the present disclosure will be described in detail with reference to the accompanying drawings to enable those skilled in the art, to which the present disclosure pertains, to easily implement the present disclosure. However, the present disclosure may be embodied in various different forms and is not limited to or restricted by the embodiments set forth below.

In order to clearly describe the present disclosure, detailed descriptions of parts irrelevant to the description or of known related technologies that may unnecessarily obscure the gist of the present disclosure have been omitted, and when adding reference numerals to components in each drawing in this specification, the same or similar reference numerals will be given to the same or similar components throughout the specification.

In addition, terms or words used in this specification and the claims should not be interpreted as being limited to their ordinary or dictionary meanings, but should be interpreted as having meanings and concepts that are consistent with the technical idea of the present disclosure, based on the principle that the inventors may appropriately define the concepts of terms to describe their disclosure in the best way possible.

It should be understood that various embodiments of the present document and terms used therein are not intended to limit the technical features described in this document to specific embodiments, but rather to include various modifications, equivalents, or substitutes of the embodiments.

In connection with the description of the drawings, similar reference numerals may be used for similar or related components.

The singular form of a noun corresponding to an item may include one or more of the item unless clearly indicated otherwise in the relevant context.

In this document, each of the phrases such as "A or B," "at least one of A and B," "at least one of A or B," "A, B, or C," "at least one of A, B, and C," and "at least one of A, B, or C" may include any one of items listed together in the relevant phrase, or all possible combinations thereof.

The term "and/or" includes a combination of a plurality of related described components, or any one of the plurality of related described components.

The terms such as "first," "second," "primary," or "secondary" may be used simply to distinguish one component from another component and do not limit the components in other aspects (130a -1) (*e.g.,* importance or order).

When one (*e.g.,* first) component is referred to as being "coupled" or "connected" to another (*e.g.,* second) component (with or without terms "functionally" or "communicatively"), this means that the one component may be directly connected to the other component (*e.g.,* wired), wirelessly, or via a third component.

The terms such as "include" or "have" are intended to specify the presence of features, numbers, steps, operations, components, parts, or combinations thereof described in this document, but do not preclude the presence or addition of one or more other features, numbers, steps, operations, components, parts, or combinations thereof.

When one component is said to be "connected," "coupled," "supported," or "in contact with" another component, this includes not only cases where the components are directly connected, coupled, supported, or in contact, but also cases where the components are indirectly connected, coupled, supported, or in contact via a third component.

When one component is said to be "on" another component, this includes not only cases where the one component is in contact with the other component, but also cases where there is another component between the two components.

Meanwhile, the terms such as "vertical direction," "below," and "forward/reverse direction" used in the following description are defined based on the drawings, and the shapes and positions of the respective components are not limited by these terms.

Since a plurality of electrodes and a plurality of separators may be partially moved as a single unit, they need to be well adhered to each other. At this time, when the surface of the electrode is relatively smooth, there may be an issue of reduced adhesion due to reasons such as a small contact area between the electrode and the separator.

Furthermore, when the electrodes and separator are accommodated in a battery case and an activation process for performing charging and discharging is performed, a gas may be generated inside the secondary battery. To this end, a degassing process is performed to move and remove the gas generated during the activation process. However, while moving the gas for the degassing process, there may occur an issue in which the gas remains between the electrode and the separator, resulting in insufficient removal of the gas. For example, the gas located between the electrode and the separator may hinder the movement of ions between the electrodes, which may prevent smooth generation of electricity.

In consideration of such issues, the present disclosure provides a roller for increasing the adhesion between the electrode and the separator and for preventing or alleviating the gas from being trapped between the electrode and the separator, and an electrode groove forming apparatus including the same.

Hereinafter, embodiments according to the present disclosure will be described in detail with reference to the accompanying drawings.

### First Embodiment

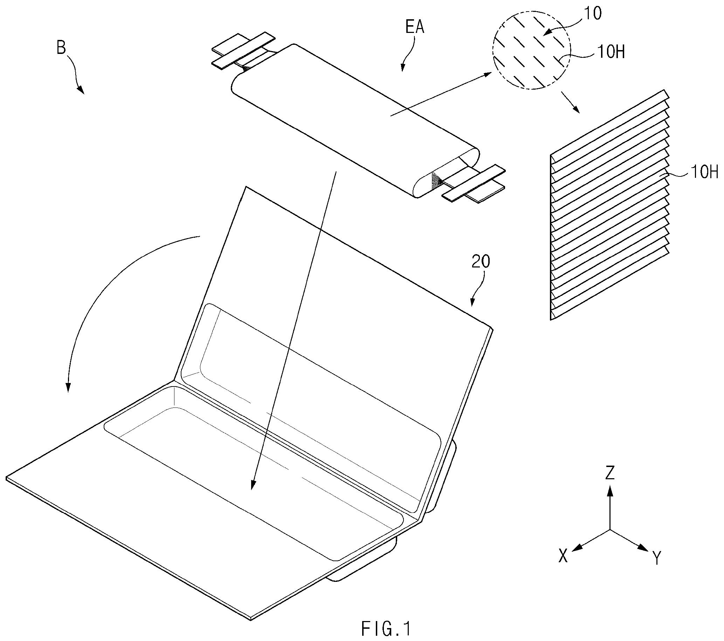

FIG. 1 is an exploded view of a secondary battery B according to a first embodiment of the present disclosure.

Referring to FIG. 1, the secondary battery B of the present disclosure will be described.

As illustrated in FIG. 1, the secondary battery B for generating electricity may be provided.

The secondary battery B may include a battery case 20 and an electrode assembly EA accommodated in the battery case 20. Here, the battery case 20 is illustrated as a pouch type, but may alternatively be cylindrical or prismatic as needed. The electrode assembly EA may include a plurality of electrodes 10 and a plurality of separators stacked between the plurality of electrodes 10.

An enlarged view of the electrode assembly EA illustrated in FIG. 1 illustrates the surface of the electrode 10 included in the electrode assembly EA. The electrode 10 may include a current collector (not illustrated) and a coating layer disposed on the current collector. Here, the coating layer may include an active material, a binder, and a conductive material. According to one embodiment of the present disclosure, the electrode 10 of the electrode assembly EA may have an electrode groove 10H formed on the surface thereof. For example, the electrode groove 10H may be formed in the coating layer disposed on the current collector to have a depth of several µm. By forming the electrode groove 10H on the surface of the electrode 10, the contact area between the electrode and the separator may be increased, for example. Accordingly, the adhesion between the electrode 10 and the separator may be improved.

Furthermore, since the electrode groove 10H is formed in one direction, a gas may easily move along the electrode groove 10H. For example, the secondary battery B may undergo an activation process in which charging and discharging are performed after the electrode assembly EA is accommodated in the battery case 20 and an electrolyte is accommodated in the battery case 20. During the activation process, a gas may be generated due to the reaction between the electrolyte and the coating layer. A degassing process may be performed to remove the generated gas after the activation process. Even if an attempt is made to remove the gas from the battery case 20, the gas may remain trapped between the electrode 10 and the separator. However, when the electrode groove 10H is formed in one direction as in the electrode 10 of the present disclosure, the gas may move along the electrode groove 10H, thereby facilitating gas discharge even after the activation process.

Furthermore, by forming the electrode groove 10H, the diffusion resistance of the electrode 10 may be reduced, thereby increasing the electrical conductivity of the electrode 10 itself.

At this time, the electrode groove 10H may be formed along the longitudinal direction of the electrode 10 to enable the formation of the electrode groove 10H even when the widths of a roller 100 and a stage to be described later are relatively small. At this time, the electrode groove 10H may be provided in a plurality. The plurality of electrode grooves 10H may be formed parallel to each other, so that the gas generated during the activation process may move in the same direction, thus facilitating gas discharge. For example, the plurality of electrode grooves 10H may extend along the longitudinal direction of the electrode 10.

As described above, forming the electrode groove 10H in the electrode 10 may produce various advantages. Hereinafter, an apparatus for forming the electrode groove 10H on the electrode 10 will be described.

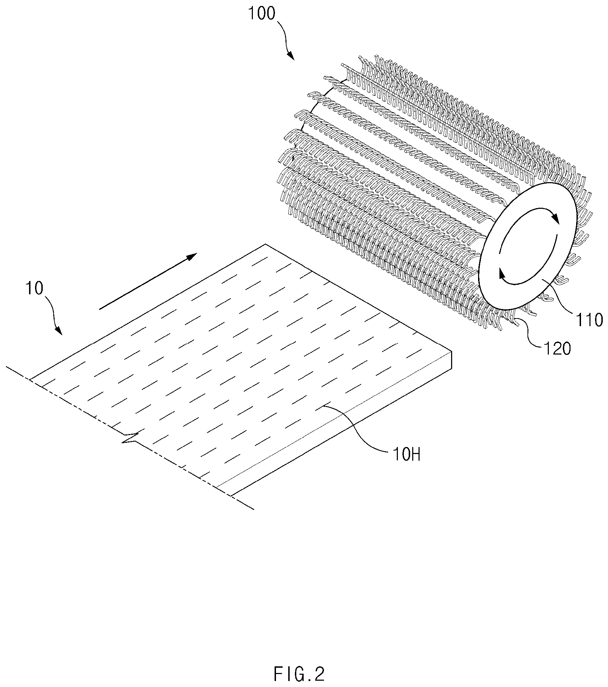

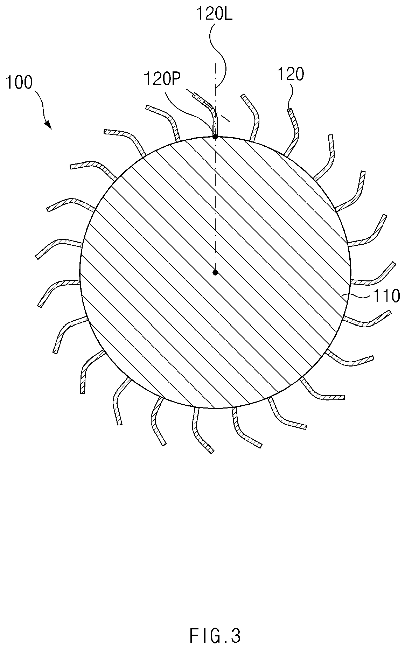

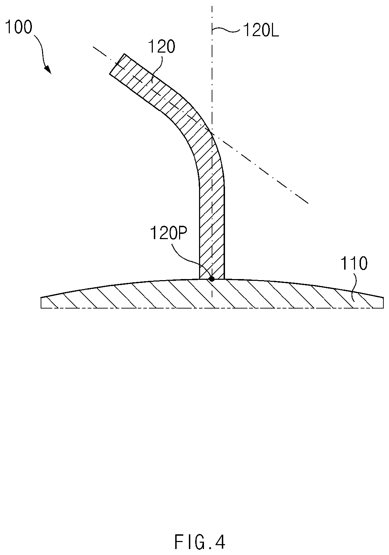

FIG. 2 is a perspective view illustrating the roller 100 for manufacturing the electrode 10 illustrated in FIG. 1 and the electrode 10 manufactured thereby. FIG. 3 is a cross-sectional view illustrating a plane perpendicular to the longitudinal direction of the roller 100 illustrated in FIG. 2. FIG. 4 is an enlarged cross-sectional view of a portion relating to a protrusion 120 illustrated in FIG. 3.

Referring to FIGS. 2 to 4, the roller 100 and an electrode groove forming apparatus 1 according to the first embodiment of the present disclosure, which are configured to form the electrode groove 10H in the electrode 10 will be described.

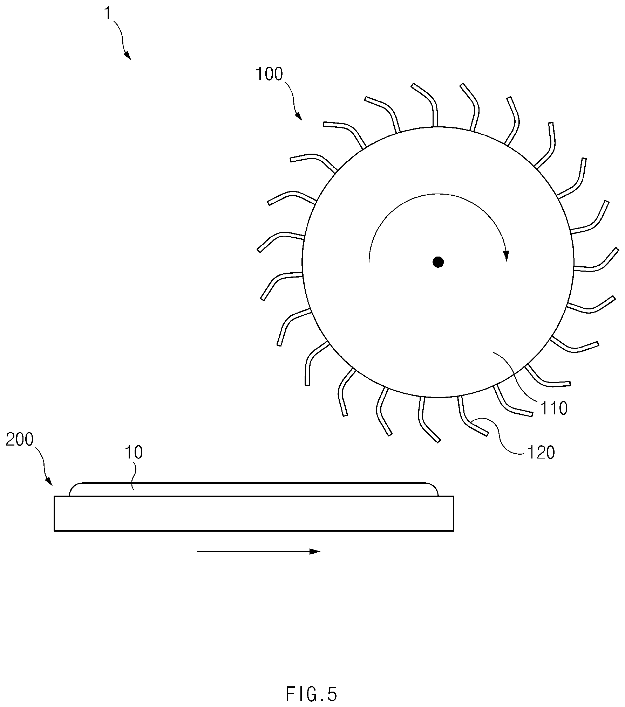

The electrode groove forming apparatus 1 configured to form the electrode groove 10H in the electrode 10 may include the roller 100 and a stage 200 (see*, e.g.,* FIGS. 5 to 6). At this time, the stage 200 may be omitted as needed. Here, the roller 100 may be used in the rolling process of the electrode 10. However, a separate roller 100 for forming the electrode groove 10H may be provided as needed.

As illustrated in FIG. 2, the roller 100 may include a roller body 110 configured to rotate and the protrusion 120 protruding from the roller body 110. As the roller body 110 rotates, the protrusion 120 rotates together, and when the protrusion 120 comes into contact with the surface of the electrode 10, a portion of the electrode 10 is removed, thereby forming the electrode groove 10H. The protrusion 120 may be provided in a plurality to form the plurality of electrode grooves 10H on the electrode 10.

At this time, as illustrated in FIGS. 3 and 4, the protrusion 120 may protrude from an extension start point 120P on the roller body 110. The protrusion 120 may include a portion having a predetermined angle relative to an imaginary line 120L that extends from the center of the roller body 110 toward the extension start point 120P. For example, the imaginary line 120L extending from the center of the roller body 110 toward the extension start point 120P may be in the radial direction relative to the cross-section of the roller body 110, and the protrusion 120 may include a portion having an angle different from the radial direction relative to the cross-section of the roller body 110. Due to this angled portion different from the radial direction of the protrusion 120, the depth of the electrode groove 10H may vary depending on the rotational direction of the roller 100, as described later. Meanwhile, the overall length of the protrusion 120 may be designed in various ways depending on the required depth of the electrode groove 10H, and in the present embodiment, may be in the order of several µm.

As an example of the shape of the protrusion 120, as illustrated in FIG. 4, the protrusion 120 may extend along the imaginary line 120L for a predetermined length from the extension start point 120P, and then bend leftward after a certain point. Alternatively, the protrusion 120 may form a curve. At this time, the plurality of protrusions 120 may all have the same shape. In other words, the plurality of protrusions 120 may be curved in the same direction relative to the imaginary line 120L.

Here, the protrusion 120 may be made of a fabric material such as cellulose or velvet, according to one embodiment. In addition, the protrusion 120 may be configured to be deformable, in order to prevent or minimize damage to the electrode 10 while forming the electrode groove 10H on the electrode 10.

The process of forming the electrode groove 10H using the roller 100 described above will be described below.

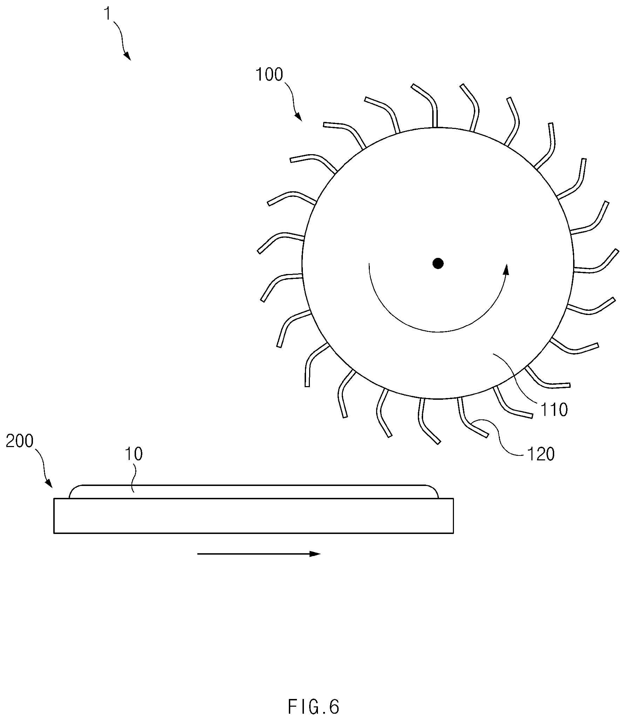

FIG. 5 is a conceptual view illustrating the formation of the electrode groove 10H on the electrode 10 when the roller 100 illustrated in FIG. 3 rotates in the forward direction. FIG. 6 is a conceptual view illustrating the formation of the electrode groove 10H on the electrode 10 when the roller 100 illustrated in FIG. 3 rotates in the reverse direction.

Referring to FIGS. 5 and 6, the formation of the electrode groove 10H on the electrode 10 using the roller 100 according to the first embodiment of the present disclosure will be described.

As described above, the electrode groove forming apparatus 1 may further include the stage 200. The stage 200 may support the electrode 10 from below, as illustrated in FIG. 5. According to one embodiment, the stage 200 may be configured to slide. In FIG. 5, the stage 200 may move rightward. As the stage 200 moves, the electrode 10 disposed on the stage 200 may also move rightward. At this time, the roller 100 may remain fixed in the horizontal direction, while the electrode 10 may move closer to the roller 100. Accordingly, when the protrusion 120 comes into contact with the electrode 10, the electrode groove 10H may be formed on the electrode 10. For example, the protrusion 120 may be configured to come into contact with the electrode 10 and form the electrode groove 10H as the stage 200 slides and moves the electrode 10. In the meantime, in another embodiment, both the stage 200 and the roller 100 may be configured to be movable, or the stage 200 may be fixed while only the roller 100 may move.

According to one embodiment, the stage 200 may be configured to slide in the longitudinal direction of the electrode 10. Thereby, the electrode groove 10H may be formed along the longitudinal direction of the electrode 10.

Furthermore, the extension direction of the protrusion 120 forming the predetermined angle may be included within the same plane as the sliding direction of the stage 200. For example, the extension direction of the protrusion 120 may be defined on the cross section of the roller body 110. Thereby, an imaginary trace formed as the protrusion 120 rotates may be defined on the cross-section of the roller body 110. Accordingly, the protrusion 120 may form the electrode groove 10H parallel to the longitudinal direction of the electrode 10.

According to one embodiment, the roller body 110 may be configured to rotate either in the forward direction in which the predetermined angle is directed, or in the reverse direction opposite to the forward direction. The protrusion 120 may be configured such that the depth of the electrode groove 10H formed while the roller body 110 rotates in the reverse direction is shallower than the depth of the electrode groove 10H formed while the roller body 110 rotates in the forward direction. FIG. 5 illustrates an example in which the roller body 110 rotates in the forward direction. The end of the protrusion 120 comes into direct contact with the electrode 10 while the roller body 110 rotates in the forward direction, thereby allowing for the relatively deep formation of the electrode groove 10H on the electrode 10. FIG. 6 illustrates an example in which the roller body 110 rotates in the reverse direction. The outer surface of the protrusion 120 comes into direct contact with the electrode 10 while the roller body 110 rotates in the reverse direction, thereby allowing for the relatively shallow formation of the electrode groove 10H on the electrode 10. In another embodiment, the extension direction of the protrusion 120 forming the predetermined angle may be opposite to the sliding direction of the stage 200. In this case, the protrusion 120 may come into contact with the electrode with a stronger frictional force, and accordingly, the electrode groove 10H may be formed relatively deeper.

The roller body 110 may be configured to have an adjustable rotation speed, thereby allowing adjustment of the depth of the electrode groove 10H. The roller body 110 may also be configured so that a gap between the roller body and the stage 200 is adjustable. Accordingly, the depth of the electrode groove 10H may be adjusted. According to one embodiment, the roller body 110 may be vertically movable relative to the stage 200.

Hereinafter, embodiments different from the first embodiment will be described. Descriptions common to the first embodiment will be omitted where possible, and differences of other embodiments will be the focus of description. Meanwhile, it is apparent that, when content not described in other embodiments is required, such content may be supplemented by referring to the content of the first embodiment.

### Second Embodiment

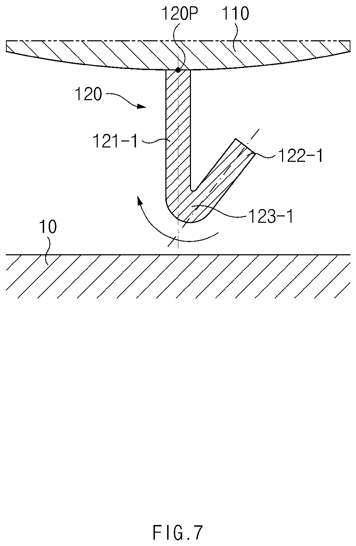

FIG. 7 is an enlarged cross-sectional view illustrating a portion relating to the protrusion according to a second embodiment of the present disclosure.

Referring to FIG. 7, the protrusion 120 according to the second embodiment of the present disclosure will be described.

The second embodiment differs from the first embodiment in that the bending degree of the protrusion 120 is different.

The protrusion 120 may include a first protrusion portion 121-1 that extends from the extension start point 120P and a second protrusion portion 122-1 that is bent at a bending portion 123-1 and extends from the first protrusion portion 121-1 at a predetermined angle relative to the first protrusion portion. In FIG. 7, the first protrusion portion 121-1 may extend downward, and the second protrusion portion 122-1 may extend upward at a predetermined angle relative to the first protrusion portion 121-1.

The bending portion 123-1 may be defined between the first protrusion portion 121-1 and the second protrusion portion 122-1. The bending portion 123-1 may be configured to come into direct contact with the electrode 10 and form the electrode groove 10H. Since the bending portion 123-1 is formed by two portions including the first protrusion portion 121-1 and the second protrusion portion 122-1, it may press the electrode 10 with greater rigidity than when only the first protrusion portion 121-1 presses the electrode 10. Accordingly, formation of the electrode groove 10H by the bending portion 123-1 may be relatively easy. Furthermore, damage to the protrusion 120 may be prevented since the rigidity of the bending portion 123-1 is greater than that of the first protrusion portion 121-1.

### Third Embodiment

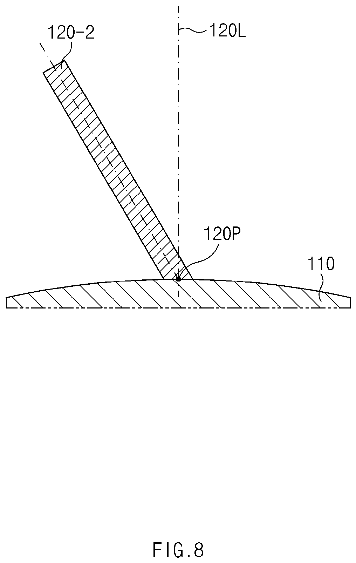

FIG. 8 is an enlarged cross-sectional view illustrating a portion relating to a protrusion 120-2 according to a third embodiment of the present disclosure.

Referring to FIG. 8, the protrusion 120-2 according to the third embodiment of the present disclosure will be described.

The third embodiment differs from the first embodiment in that the shape of the protrusion 120-2 is different.

The protrusion 120-2 may extend from the extension start point 120P at a predetermined angle relative to the imaginary line 120L. As illustrated in FIG. 8, the protrusion 120-2 may extend along an imaginary straight line having a predetermined angle relative to the imaginary line 120L.

### Fourth Embodiment

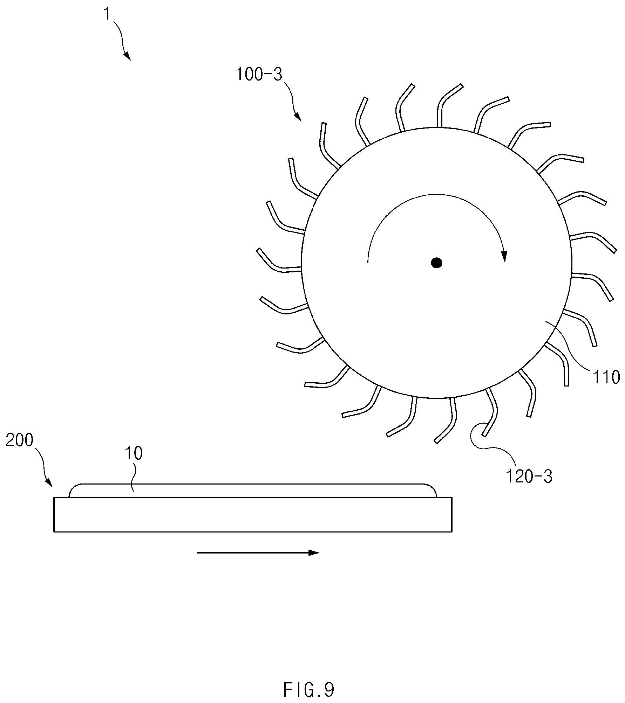

FIG. 9 is a conceptual view illustrating the formation of the electrode groove 10H on the electrode 10 when the roller 100 according to a fourth embodiment of the present disclosure rotates in the forward direction.

Referring to FIG. 9, the rotational direction of a roller 100-3 according to the fourth embodiment of the present disclosure is defined.

The fourth embodiment differs from the first embodiment in that the definition of the forward direction is different.

The forward rotational direction of the roller 100-3 in the fourth embodiment may be the same as the reverse direction in the first embodiment. When the roller 100-3 rotates in the forward direction, a protrusion 120-3 may form the electrode groove 10H to a greater depth.

### Fifth Embodiment

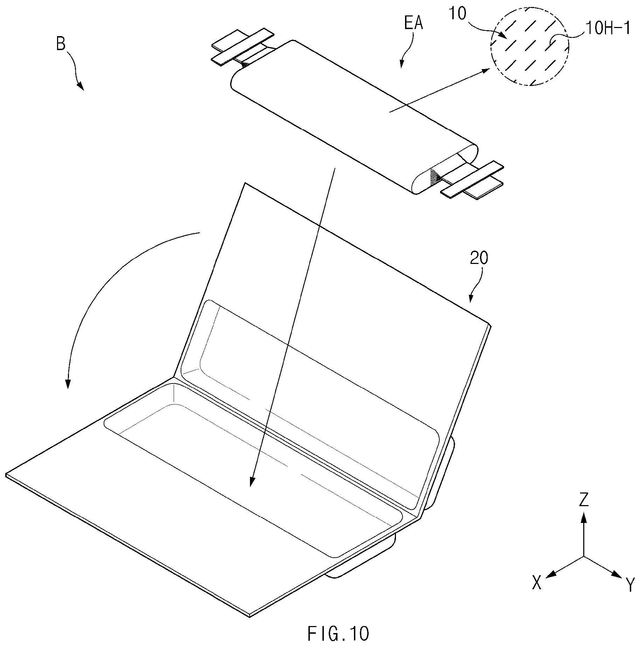

FIG. 10 is an exploded view of the secondary battery B according to a fifth embodiment of the present disclosure.

Referring to FIG. 10, an electrode groove 10H-1 according to the fifth embodiment of the present disclosure will be described.

The fifth embodiment differs from the first embodiment in that the extension direction of the electrode groove 10H-1 is different.

According to one embodiment, the electrode groove 10H-1 may extend in the width direction of the electrode 10. The electrode 10 is shorter in the width direction than in the length direction, so that the number of electrode grooves 10H-1 according to the fifth embodiment may be greater and the length thereof may be shorter than those of the first embodiment. At this time, the gas generated during the activation process and located between the electrode grooves 10H-1 according to the fifth embodiment may be discharged even if it moves a shorter distance than in the electrode grooves 10H of the first embodiment, making gas discharge easier.

Unless explicitly stated otherwise, the embodiments described above may be combined with other embodiments. Alternatively, unless it is clearly restricted that one embodiment may not be combined with another embodiment, it should be understood that combinations between embodiments are possible. Any combination of one embodiment with another embodiment is considered to be disclosed in this document.

Although the present disclosure has been described above in detail with reference to the limited embodiments and drawings, the present disclosure is not limited thereto, and various implementations are possible by those skilled in the art within the technical idea of the present disclosure and the scope of equivalents of the claims set forth below.

## Claims

1. An electrode groove forming apparatus that forms an electrode groove on an electrode, the electrode groove forming apparatus comprising:
a roller body configured to rotate;
a stage configured to support the electrode; and
a protrusion protruding from an extension start point on the roller body,
wherein the protrusion includes a portion having a predetermined angle relative to an imaginary line extending from a center of the roller body toward the extension start point.

2. The electrode groove forming apparatus according to claim 1, wherein the protrusion forms a curve.

3. The electrode groove forming apparatus according to claim 1, wherein the protrusion is provided in a plurality on the roller body, and
the plurality of protrusions are curved in the same direction relative to the imaginary line.

4. The electrode groove forming apparatus according to claim 1, wherein the protrusion includes:
a first protrusion portion that extends from the extension start point; and
a second protrusion portion that is bent at a bending portion and extends from the first protrusion portion at a predetermined angle relative to the first protrusion portion.

5. The electrode groove forming apparatus according to claim 4, wherein the bending portion is configured to form the electrode groove.

6. The electrode groove forming apparatus according to claim 1, wherein the roller body is configured to rotate in a forward direction or in a reverse direction opposite to the forward direction, the forward direction being a direction in which an extension direction forming the predetermined angle is directed toward the electrode.

7. The electrode groove forming apparatus according to claim 6, wherein the protrusion is configured such that a depth of the electrode groove formed while the roller body rotates in the reverse direction is shallower than the depth of the electrode groove formed while the roller body rotates in the forward direction.

8. The electrode groove forming apparatus according to claim 1, wherein the protrusion is configured to be deformable.

9. The electrode groove forming apparatus according to claim 1, wherein the protrusion is made of a fabric material.

10. The electrode groove forming apparatus according to claim 1, wherein the stage is configured to slide, and
the protrusion is configured to come into contact with the electrode and form the electrode groove as the stage slides and moves the electrode.

11. The electrode groove forming apparatus according to claim 10, wherein the stage is configured to slide in a longitudinal direction of the electrode.

12. The electrode groove forming apparatus according to claim 10, wherein an extension direction of the protrusion forming the predetermined angle is included within the same plane as a sliding direction of the stage.

13. The electrode groove forming apparatus according to claim 1, wherein the roller body is configured to have an adjustable rotation speed.

14. The electrode groove forming apparatus according to claim 10, wherein the roller body is configured such that a gap between the roller body and the stage is adjustable.

15. The electrode groove forming apparatus according to claim 1, wherein the roller body and the protrusion define a roller, and
the roller is configured to perform rolling on the electrode.

16. A roller comprising:
a roller body configured to rotate; and
a plurality of protrusions protruding from an extension start point on the roller body,
wherein the plurality of protrusions include a portion having a predetermined angle relative to an imaginary line extending from a center of the roller body toward the extension start point.

17. The roller according to claim 16, wherein the plurality of protrusions form a curve.

18. The roller according to claim 16, wherein the plurality of protrusions are curved in the same direction relative to the imaginary line.

19. The roller according to claim 16, wherein the plurality of protrusions include:
a first portion that extends from the extension start point; and
a second portion that is bent at a bending portion and extends from the first portion at a predetermined angle relative to the first portion.

20. A secondary battery comprising:
an electrode having a plurality of electrode grooves formed therein and stacked in a plurality;
a separator stacked alternately with the plurality of electrodes; and
a battery case accommodating the electrode and the separator,
wherein the plurality of electrode grooves are formed parallel to each other on the electrode.
